# EUROPEAN PATENT APPLICATION

(11) **EP 4 759 839 A1**
(43) Date of publication of application: **17.06.2026**
(21) Application number: 24852058.7
(22) Date of filing: 27.06.2024
(51) Int. Cl.: C08F 210/16, C08F 4/659, C08F 4/6592, C08J 5/18, B65D 65/40

(54) **HIGH-DENSITY ETHYLENE-BASED POLYMER USING HYBRID SUPPORTED CATALYST, AND PREPARATION METHOD THEREOF**

(30) Priority: 07.08.2023 KR 20230103168
(71) Applicant: Hanwha Solutions Corporation, Jung-gu Seoul 04541 (KR)
(72) Inventor: PARK, Hye Ran, Daejeon 34128 (KR); KIM, Sung Dong, Daejeon 34128 (KR); JOUNG, Ui Gap, Daejeon 34128 (KR); SEO, Junho, Daejeon 34128 (KR); LEE, Munhee, Daejeon 34128 (KR); KIM, Ji Ho, Daejeon 34128 (KR); LIM, Jae Yun, Daejeon 34128 (KR); JOO, Sung Hwan, Daejeon 34128 (KR)
(74) Representative: Berggren Oy
(86) International application number: PCT/KR2024/009006
(87) International publication number: WO 2025/033702

(57) **Abstract**

The present disclosure relates to a high-density ethylene-based polymer exhibiting high processability by using a hybrid catalyst composition and to a method of preparing the same, and provides a high-density polyethylene-based polymer having excellent optical properties, excellent mechanical properties such as impact resistance and hardness, and excellent stretchability. The high-density ethylene-based polymer of the present disclosure provides a polyethylene-based polymer capable of biaxial stretching or simultaneous stretching.

## Description

### Technical Field

The present disclosure provides a method of preparing high-density polyethylene using a hybrid metallocene catalyst, and a high-density ethylene-based polymer prepared thereby and exhibiting high processability.

### Background Art

Conventional packaging films are made of materials that require high processability, and are mainly made of low-density polyethylene. Low-density polyethylene has high elongation, but its low density reduces its physical properties such as hardness, flexural strength, and chemical resistance, and thus it is impossible to manufacture a packaging film that satisfies these required physical properties by using low-density polyethylene alone.

Therefore, conventional packaging films were manufactured in the form of a laminated film by coextruding or bonding a polyethylene film with polyethylene terephthalate (PET) or polyamide (PA). However, this laminated film is a laminated film of different polymers and does not satisfy the requirement that 90 % or more of the resin be of a single material, thus failing to comply with environmental regulations. Therefore, it is difficult to recycle the laminated film, and thus there is a problem in that it is difficult recognize the laminated film as an environmentally friendly resin.

Therefore, in order to overcome the above problems of conventional packaging films, it is necessary to develop a new polyethylene that has excellent stretchability while satisfying sufficient physical properties such as impact strength, chemical resistance, and heat resistance.

Conventional polyethylene polymerization uses a Ziegler-Natta catalyst or a chromium-based catalyst, and the prepared polyethylene has a broad molecular weight distribution, which can improve melt fluidity. However, Ziegler-Natta catalysts or chromium-based catalysts have non-uniform active sites. Therefore, polyethylene prepared using a Ziger-Natta catalyst cannot selectively control the processability and mechanical properties targeted by those skilled in the art, thus making it difficult to manufacture packaging materials having excellent processability and optimal properties. In addition, ethylene-α-olefin copolymers prepared using Ziegler-Natta catalysts have problems such as deteriorations in chemical resistance, mechanical strength, and processability as a result of the unstable active sites of the catalysts, which results in a concentrated distribution of low-molecular-weight comonomers.

To solve these problems, U.S. Patent No. 6,525,150 proposed a metallocene catalyst that can produce a resin with a narrow molecular weight distribution and, in the case of a copolymer, a uniform distribution of comonomers by utilizing the uniform active sites of metallocene. However, there was still a problem that this resin has significantly poor molding processability including stretchability, despite having excellent mechanical strength.

In addition, U.S. Patent No. 6,841,631 proposed a method of preparing polyolefins having a bimodal molecular weight distribution by using catalysts with different reactivity to comonomers from each other. However, not only was it difficult to obtain a product having uniform physical properties, but the stretchability of the product was also poor and the mechanical strength thereof was also reduced.

Therefore, there is a need for the development of a new polyethylene-based single resin for packaging that has sufficient optical transparency, impact strength, chemical resistance, heat resistance, and excellent stretchability to solve the above problems, and that is also recyclable to satisfy environmental regulations.

### Disclosure of Invention

### Technical Problem

An object of the present disclosure is to provide a high-density polyethylene-based polymer capable of biaxial stretching or simultaneous biaxial stretching at a high magnification and a method of preparing a high-density polyethylene-based polymer capable of being prepared through a single polymerization.

Another object of the present disclosure is to provide a high-density polyethylene-based polymer having excellent optical properties, excellent mechanical properties such as impact resistance and hardness, and excellent processability, and a method of preparing a high-density polyethylene-based polymer capable of being prepared through a single polymerization.

Another object of the present disclosure is to provide a high-density polyethylene film that satisfies excellent transparency, excellent mechanical strength, and excellent stretchability even as a single resin, rather than as a laminate or mixed resin of different resins.

In addition, the present disclosure aims to provide a high-density polyethylene film as an excellent environmentally friendly food packaging material, because it is prepared from a single resin and is recyclable.

### Solution to Problem

In order to prepare the above high-density polyethylene resin, the present disclosure provides a method of preparing high-density polyethylene, the method including: polymerizing ethylene and C₄-C₂₀ α-olefin under a hybrid metallocene catalyst including transition metal compounds of Formulas 1 to 3 below, wherein the hybrid metallocene catalyst includes the transition metal compounds at a molar ratio of Formula 1: Formula 2: Formula 3 = 1: 0.2 to 3: 1 to 7: 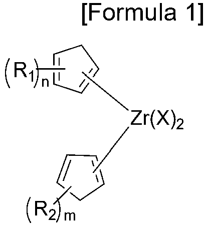 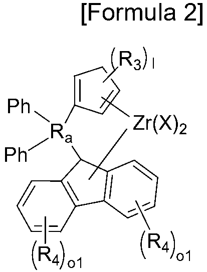 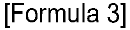 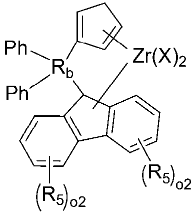 (in Formulas 1 to 3, R₁, R₂, R₃, R₄ and R₅ are each independently C₁-C₆ alkyl, Rₐ and R_{b} are each independently C₁-C₆ alkylene, X is a halogen, n and m are integers of 0 to 5, l is an integer of 1 to 4, and o1 and o2 are integers of 0 to 4.)

In an aspect of the present disclosure, the C₄-C₂₀ α-olefin may be a C₅-C₈ α-olefin.

In an aspect of the present disclosure, Formula 1 may be Formula 4 below, Formula 2 may be Formula 5 below, and Formula 3 may be Formula 6 below:

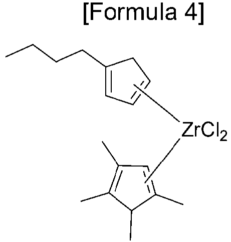

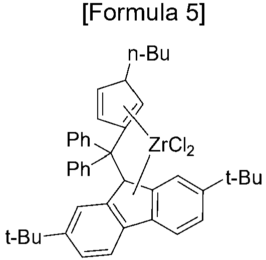

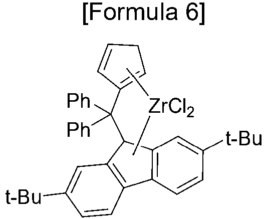

In an aspect of the present disclosure, the polymerization temperature may be 60 °C to 90 °C.

In an aspect of the present disclosure, the hybrid metallocene catalyst may be a supported catalyst in which a transition metal compound and a cocatalyst are supported on a carrier.

In an aspect of the present disclosure, the cocatalyst is at least one selected from the group consisting of compounds represented by Formulas 7 to 9 below:

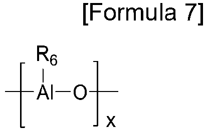

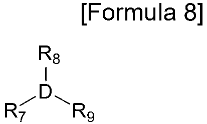

[Formula 9] [L-H]⁺[Z(A)4]⁻ or [L]⁺[Z(A)4]⁻

(in Formulas 7 to 9, x is an integer greater than or equal to 2, R₆ is halogen, C₁-C₂₀ alkyl, or C₁-C₂₀ alkyl substituted with halogen, D is aluminum (Al) or boron (B), R₇, R₈, and R₉ are each independently a halogen atom, straight or branched C₁-C₂₀ alkyl, C₁-C₂₀ alkyl substituted with halogen, or C₁-C₂₀ alkoxy, L is a neutral or cationic Lewis base, [L-H]+ and [L]+ are Brønsted acids, Z is a group 13 element, and A is C₆-C₂₀ aryl or C₁-C₂₀ alkyl.)

In an aspect of the present disclosure, the carrier may be at least one selected from the group consisting of silica, aluminum oxide, and magnesium oxide.

The present disclosure provides a high-density polyethylene resin prepared by polymerizing ethylene and C₄-C₂₀ α-olefin in the presence of a hybrid catalyst, wherein the high-density polyethylene resin has a density of 0.94 g/cm3 or more, a PDI of 25 or more, and is capable of being stretched 4 times or more in a machine direction (MD) at a speed of 200 %/s at 120 to 130°C and then sequentially biaxially stretched 4 times or more in a transverse direction (TD), or of being simultaneously biaxially stretched 4x4 times or more in the machine direction (MD and the transverse direction (TD).

In an aspect of the present disclosure, the hybrid metallocene catalyst includes transition metal compounds of Formulas 1 to 3 below: 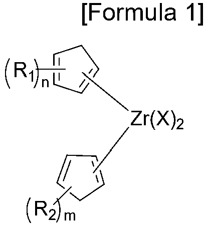 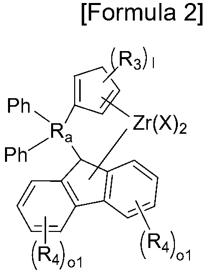 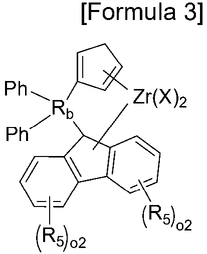 (in the Formulas 1 to 3, R₁, R₂, R₃, R₄, and R₅ are each independently C₁-C₆ alkyl, Rₐ and R_{b} are each independently C₁-C₆ alkylene, X is a halogen, n and m are integers of 0 to 5, l is an integer of 1 to 4, and o1 and o2 are integers of 0 to 4.)

In an aspect of the present disclosure, the hybrid metallocene catalyst may include the transition metal compounds at a molar ratio of Formula 1: Formula 2: Formula 3 = 1: 0.2 to 3: 1 to 7.

In an aspect of the present disclosure, the C₄-C₂₀ α-olefin may a C₅-C₈ α-olefin.

In an aspect of the present disclosure, the high-density polyethylene resin may have an MFR (Melt Flow Rate) of 40 or more.

In an aspect of the present disclosure, the high-density polyethylene resin may have a crystallinity (Xc) of 70% or less.

The present disclosure provides a high-density polyethylene film comprising the above high-density polyethylene resin.

In an aspect of the present disclosure, the high-density polyethylene film may have a haze of 25% or less as measured according to ASTM D1003.

In an aspect of the present disclosure, the high-density polyethylene film may have a transparency of 70% or more as measured according to ASTM D1003.

In an aspect of the present disclosure, the high-density polyethylene film may have an impact strength of 120 gf or more as measured according to ASTM D1709.

The present disclosure provides a packaging material manufactured by the above high-density polyethylene film.

### Advantageous Effects of Invention

The present disclosure can provide a high-density polyethylene-based polymer capable of biaxial stretching or simultaneous biaxial stretching at a high magnification using the hybrid metallocene catalyst, and a preparation method thereof.

The present disclosure can provide a high-density polyethylene-based polymer having excellent optical properties, excellent mechanical properties such as impact resistance and hardness, and excellent processability, and a preparation method thereof.

The present disclosure can provide a high-density polyethylene-based polymer capable of biaxial stretching or simultaneous biaxial stretching at a high magnification, for example, capable of simultaneous and sequential stretching at least 4 times in MD and TD directions using the hybrid metallocene catalyst, and a preparation method thereof.

### Best Mode for Carrying out the Invention

Hereinafter, the present disclosure will be described in detail. However, this is merely exemplary, and the present disclosure is not limited to the specific embodiments described by way of example.

Unless defined in the present specification, all technical and scientific terms used herein have the same meaning as that commonly understood by one of those skilled in the art to which the present disclosure belongs. The terms used in the description herein are for the purpose of describing particular embodiments only and are not intended to restrict the present disclosure.

Additionally, the singular forms used in the specification and the appended claims are intended to include the plural forms as well, unless the context clearly dictates otherwise.

Additionally, when a part is expressed to "include" a component, this does not mean that it excludes other components, but rather that it may include other components, unless otherwise specifically stated.

Additionally, the terms "about," "substantially," etc. used in the present specification are used in a meaning close to or at the numerical value when manufacturing and material tolerances inherent to the meanings mentioned are presented, and are used to prevent unscrupulous infringers from unfairly using the disclosure contents in which exact or absolute values are mentioned to aid in the understanding of the present disclosure.

Additionally, the polyethylene used in the present specification may be an ethylene homopolymer or a polyethylene copolymer containing at least 80 mol% or more of ethylene repeating units.

The present disclosure provides a high-density polyethylene capable of manufacturing a packaging material even as a single material, and for this purpose, provides a method for preparing a high-density polyethylene using a hybrid metallocene catalyst including three types of transition metal compounds.

The present disclosure provides a high-density polyethylene resin prepared by polymerizing ethylene and C₄-C₂₀ α-olefin in the presence of a hybrid metallocene catalyst, wherein the high-density polyethylene resin has a density of 0.94 g/cm3 or more, a PDI of 25 or more, and is capable of being stretched 4 times or more in a machine direction (MD) at a speed of 200 %/s at 120 to 130°C and then sequentially biaxially stretched 4 times or more in a transverse direction (TD), or of being simultaneously biaxially stretched 4x4 times or more in the machine direction (MD) and the transverse direction (TD).

In an aspect of the present disclosure, the metallocene may include transition metal compounds of Formulas 1 to 3 below, wherein the hybrid metallocene catalyst includes the transition metal compounds at a molar ratio of Formula 1: Formula 2: Formula 3 = 1: 0.2 to 3: 1 to 7: 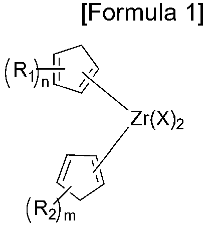 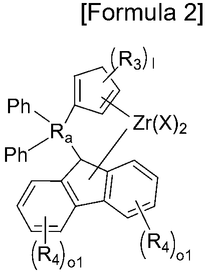 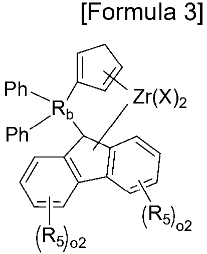 (in the Formulas 1 to 3, R₁, R₂, R₃, R₄ and R₅ are each independently C₁-C₆ alkyl, Rₐ and R_{b} are each independently C₁-C₆ alkylene, X is a halogen, n and m are integers of 0 to 5, l is an integer of 1 to 4, and o1 and o2 are integers of 0 to 4.)

The high-density polyethylene resin may be a high-density polyethylene that satisfies the above-described properties and that can be used to manufacture a packaging material by using the hybrid metallocene catalyst including the transition metal compound of Formula 1, the transition metal compound Formula 2, and the transition metal compound of Formula 3 at the above-defined molar ratio with only one polymerization process.

The method of preparing the high-density polyethylene is described in more detail below.

In an aspect of the present disclosure, the C₄-C₂₀ α-olefin may be specifically a C₄-C₁₂ α-olefin, and more specifically, 1-hexene. As another example, the C₄-C₂₀ α-olefin may be at least one selected from the group consisting of 1-butene, 1-pentene, 3-methyl-1-butene, 1-hexene, 4-methyl-1-pentene, 3-methyl-1-pentene, 1-hexene, 1-heptene, 1-octene, 1-decene, 1-undecene, 1-dodecene, 1-tetradecene, 1-hexadecene, 1-itocene, 4,4-dimethyl-1-pentene, 4,4-diethyl-1-hexene, and 3,4-dimethyl-1-hexene.

In an aspect of the present disclosure, the high-density polyethylene may have a PDI of 25 or more, 26 or more, 28 or more, 30 or more, 40 or more, 50 or more, 60 or more, 70 or less, 60 or less, 50 or less, 55 or less, 50 or less, or 40 or less, for example, 25 to 70, 25 to 60, or any of the above values and any value therebetween.

The high-density polyethylene having a PDI in the above range can have a balanced combination of the excellent mechanical strength of high-molecular-weight polyethylene and the excellent processability and flexural elasticity of low-molecular-weight polyethylene, and thus can be manufactured into a high-density polyethylene film having excellent transparency and excellent mechanical strength.

For example, the high-density polyethylene may have a weight average molecular weight of 50,000 to 20,000 g/mol, 70,000 to g/mol, or 90,000 to 15,000 g/mol, and a number average molecular weight of 2,000 to 10,000 g/mol, 3,000 to 7,000 g/mol, or 3,000 to 5,000 g/mol.

As another example, the high-density polyethylene may have a Z-weight average molecular weight of 200,000 to 500,000 g/mol, 250,000 to 500,000 g/mol, or 300,000 to 500,000 g/mol.

The high-density polyethylene has a wide PDI as described above and a Z-weight average molecular weight within the above range, so that it can have excellent film processability, and the high-density polyethylene film manufactured using this polyethylene can have high mechanical strength and strength characteristics capable of biaxial stretching.

In an aspect of the present disclosure, the high-density polyethylene may be stretched 4 times or more in the machine direction (MD) at a speed of 200 %/s at 120 to 130°C and then stretched 4 times or more, 5 times or more, 6 times or more, 7 times or more, 9 times or more, or 20 times or less, for example, 4 to 20 times, 5 to 20 times, 6 to 15 times, 7 to 15 times, or any of the above values and any value therebetween.in the transverse direction (TD).

The high-density polyethylene can be stretched four times in MD and then stretched in TD within the above range, so that film processability can be excellent even through a sequential biaxial stretching process, and the manufactured high-density polyethylene film can have excellent appearance, excellent mechanical strength, and excellent transparency.

In another aspect of the present disclosure, the high-density polyethylene resin can be simultaneously stretched in the machine direction (MD) and the transverse direction (TD) at a speed of 200 %/s at 120 to 130°C 4 times or more, 5 times or more, 6 times or more, 7 times or more, 9 times or more, or 20 times or less, for example, 4 to 20 times, 5 to 20 times, 6 to 15 times, 7 to 15 times, or any of the above values and any value therebetween.

The high-density polyethylene can be simultaneously stretched in MD and TD within the above range, so that it can have excellent film processability even through a simultaneous biaxial stretching process, and the manufactured high-density polyethylene film can have excellent appearance, excellent mechanical strength, and excellent transparency.

That is, the high-density polyethylene has an advantage of excellent film formability regardless of whether the film is processed using a sequential biaxial stretching process or a simultaneous biaxial stretching process.

In an aspect of the present disclosure, the high-density polyethylene may have a density of 0.94 g/cm³ or more, 0.96 g/cm³ or more, 0.99 g/cm³ or less, 0.98 g/cm3 or less, 0.97 g/cm³ or less, or 0.96 g/cm³ or less, for example, 0.94 to 0.99 g/cm³, 0.96 to 0.99 g/cm³, or any of the above values and any value therebetween.

The high-density polyethylene not only has excellent stretchability as described above, but also satisfies the density within the above range, so that a high-density polyethylene film having even better mechanical strength can be manufactured.

In an aspect of the present disclosure, the high-density polyethylene may have a melt flow ratio (MFR) of 40 or more, 45 or more, 50 or more and 100 or less, 80 or less, or 70 or less, for example, 40 to 100, 40 to 80, 40 to 70, or any of the above values and any value therebetween.

The high-density polyethylene resin has high density, but satisfies an MFR within the above range, so it does not break when stretched and can be formed into a film having an excellent appearance.

The MFR may be a ratio (MI(21.6 kg)/MI(2.16 kg)) of melting indices MI(21.6 kg) and MI(2.16 kg) under a load of 21.6 kg and a load of 2.16 kg at 190°C according to ASTM D 1238.

In an aspect of the present disclosure, the high-density polyethylene resin may have a crystallinity (Xc) of 70% or less, 30% or more, 40% or more, 50% or more, for example, 30 to 70%, 40 to 70%, or any of the above values and any value therebetween, as measured using a differential scanning calorimeter (DSC, device name: DSC 2920, manufacturer: TA instrument).

Since the high-density polyethylene resin has the above crystallinity, it has a high amorphous region and has thus excellent processability, especially excellent stretchability, so a film manufactured including it can realize better transparency.

Additionally, since the high-density polyethylene resin includes some high-molecular-weight polyethylenes having a lamellar structure in addition to amorphous properties, it includes also crystallinity regions, so high mechanical strength can be achieved.

That is, the high-density polyethylene resin according to the present disclosure is capable of sequential biaxial stretching and simultaneous biaxial stretching at the above-described magnification, and has processability that exhibits superior stretchability compared to conventional high-density polyethylene, so that it has an effect of being usable as a single polyethylene packaging material when applied to polyethylene-based packaging materials. This can solve the problem that conventional polyethylene-based packaging materials could not achieve high mechanical properties and stretching characteristics, thus making it impossible to manufacture packaging materials made of a single polyethylene component.

Accordingly, the high-density polyethylene resin according to the present disclosure enables easy manufacturing of packaging materials using a single material called high-density polyethylene having excellent mechanical properties, thereby replacing packaging materials having a laminated structure using low-density polyethylene that was not recyclable, including conventional resins.

Therefore, the high-density polyethylene resin according to the present disclosure has a remarkable effect in terms of economic and environmental protection in that it can be applied to polyethylene packaging materials to provide packaging materials that can be recycled.

In addition, since the high-density polyethylene resin according to the present disclosure satisfies the values of density, PDI, MFR and crystallinity (Xc) described above, it exhibits high optical properties and stretching properties, and thus has an effect of exhibiting properties capable of being used as a packaging material and a single resin product, despite being a high-density polyethylene.

Although this does not limit the interpretation, it can be interpreted that the high-density polyethylene has high hardness, chemical resistance, transparency, and biaxial stretching characteristics by having a high PDI value, low crystallinity, and high MFR while satisfying the above-described density range.

The present disclosure provides a high-density polyethylene film including the above-described high-density polyethylene resin.

The high-density polyethylene film of the present disclosure can be used in products requiring high mechanical properties and stretching properties in addition to high density, high PDI, low crystallinity, high MFR, and biaxial stretching properties as it includes the above-described high-density polyethylene resin, and in particular, can be applied to the above-described polyethylene packaging material to manufacture a polyethylene single packaging material.

The high-density polyethylene film of the present disclosure can be manufactured by extruding and stretching the above-described high-density polyethylene resin or by blow-molding this polyethylene resin, but the manufacturing method thereof is not limited as long as the high-density polyethylene resin can be formed into a film.

In an aspect of the present disclosure, the high-density polyethylene film may have a haze of 25% or less, 20% or less, 18% or less, 16% or less, 1% or more, 5% or more, or 10% or more, for example, 1 to 25%, 5 to 20%, or any of the above values and any value therebetween, as measured according to ASTM D1003.

In an aspect of the present disclosure, the high-density polyethylene film may have a transparency of 50% or more, 60% or more, 70% or more, 99% or less, 98% or less, 95% or less, or 90% or less, for example, 50 to 99%, specifically 60 to 99%, more specifically 80 to 99%, or any of the above values and any value therebetween, as measured according to ASTM D1003.

In addition, the high-density polyethylene film can have excellent transparency within the above range even when manufactured by sequential biaxial stretching of a high-density polyethylene resin, and when manufactured by simultaneous biaxial stretching of a high-density polyethylene resin, it can have excellent transparency with a haze of 1/1.5 to 1/3 compared to the high-density polyethylene film manufactured by sequential biaxial stretching, and thus can be preferred.

In an aspect of the present disclosure, the high-density polyethylene film may have an impact strength of 120 gf or more, 150 gf or more, 200 gf or more, 210 gf or more, 250 gf or more, 300 gf or more, 350 gf or more, 360 gf or more, 370 gf or more, 380 gf or more, 500 gf or less, 450 gf or less, or 400 gf or less, for example, 100 to 500 gf, 120 to 450 gf, or any of the above values and any value therebetween as measured according to ASTM D1709.

Since the high-density polyethylene film includes the above-described high-density polyethylene resin, a high-quality high-density polyethylene film having a uniform surface and high strength can be provided by utilizing high stretching characteristics. In addition, the high-density polyethylene film manufactured as above exhibits low haze, high transparency and high impact strength, so that it can be easily applied to polyethylene products, and thus has high commercialization value, and particularly, can be advantageously applied to the manufacturing of single polyethylene packaging materials.

Hereinafter, a method of preparing high-density polyethylene that can be applied to a packaging film as described above will be described in detail.

The present disclosure provides a method of preparing high-density polyethylene, the method including: polymerizing ethylene and C₄-C₂₀ α-olefin under a hybrid metallocene catalyst including transition metal compounds of Formulas 1 to 3 below, wherein the hybrid metallocene catalyst includes the transition metal compounds at a molar ratio of Formula 1: Formula 2: Formula 3 = 1: 0.2 to 3: 1 to 7: 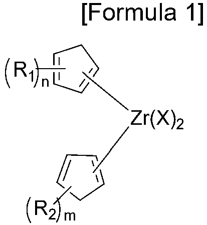 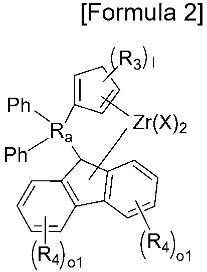 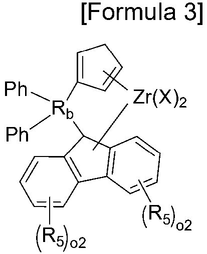 (in the Formulas 1 to 3, R₁, R₂, R₃, R₄ and R₅ are each independently C₁-C₆ alkyl, Rₐ and R_{b} are each independently C₁-C₆ alkylene, X is a halogen, n and m are integers of 0 to 5, l is an integer of 1 to 4, and o1 and o2 are integers of 0 to 4.)

In the method of preparing high-density polyethylene using the hybrid metallocene catalyst, it is possible to prepare high-density polyethylene that is transparent and has high processability while exhibiting high mechanical properties such as sufficient heat resistance, impact strength, and hardness through just one process, and thus there is an effect of providing a method of preparing high-density polyethylene applicable to packaging materials.

In an aspect of the present disclosure, in the Formula 1, R₁ may be C₃-C₆ alkyl, R₂ may be C₁-C₃ alkyl, X may be Cl, n may be an integer of 1 to 3, and m may be an integer of 0 to 2.

In another aspect of the present disclosure, the transition metal compound of the Formula 1 may be represented by Formula 4 below:

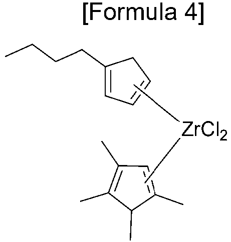

The transition metal compound of the Formula 4 has excellent catalytic activity and very fast chain mobility, so high-density polyethylene prepared using a hybrid metallocene catalyst containing this transition metal compound can have excellent processability and stretchability, and the manufactured polymer film can have excellent transparency.

In an aspect of the present disclosure, in the Formula 2, R₃ and R₄ may be each independently C₂-C₅ alkyl, Rₐ may be C₁-C₃ alkylene, X may be Cl, l may be an integer of 1 to 2, and o1 may be an integer of 1 to 2.

In another aspect of the present disclosure, the transition metal compound of the Formula 2 may be represented by formula 5 below:

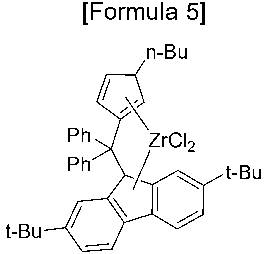

The hybrid metallocene catalyst including the transition metal compound of the Formula 5 may be preferred because it can exhibit high monomer incorporation during the preparation of a polymer.

In an aspect of the present disclosure, in the Formula 3, R₅ may be each independently C₂-C₅ alkyl, R_{b} may be C₁-C₃ alkylene, X may be Cl, and o2 may be an integer of 1 to 2.

In another aspect of the present disclosure, the transition metal compound of the Formula 3 may be represented by formula 6 below:

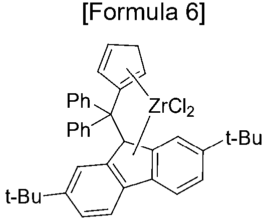

The hybrid metallocene catalyst including the transition metal compound of the Formula 6 can exhibit high comonomer mixing and can prepare high-molecular-weight and high-density polyethylene during polymerization, and thus can improve the mechanical properties such as impact strength and flexural strength of the prepared high-density polyethylene resin.

In an aspect of the present disclosure, the hybrid metallocene catalyst may include the above-described transition metal compounds of the Formulas 1 to 3 at a molar ratio of Formula 1: Formula 2: Formula 3 = 1: 0.2 to 3: 1 to 7.

For example, the molar ratio of the Formulas 1 to 3 includes the meaning that the molar ratio of Formula 2 to Formula 1 may be 1:0.2 to 3, and the molar ratio of Formula 3 to Formula 1 may be 1:1 to 7.

The hybrid metallocene catalyst including a transition metal compound at a molar ratio within the above range may be preferred because it can prepare a high-density polyethylene resin having both desirable processability and physical properties for application to the above-described packaging material or a base film for a laminated packaging material during polymerization.

Specifically, when the hybrid metallocene catalyst includes the transition metal compounds of Formulas 1 to 3 at a molar ratio within the above range, the prepared high-density polyethylene can satisfy biaxial stretching characteristics and high processability, and at the same time, can satisfy excellent heat resistance and excellent impact strength. In addition, the hybrid metallocene catalyst has excellent activity, so it enables stable operation in the preparation of high-density polyethylene, and thus has a process advantage in that high-density polyethylene can be continuously prepared.

In an aspect of the present disclosure, the hybrid metallocene catalyst may be a supported catalyst in which the above-described transition metal compound and a cocatalyst are supported on a carrier.

Since the hybrid metallocene catalyst has a form of the hybrid supported catalyst, more stable polymerization and improved catalyst activity can be achieved during polymerization.

In an aspect of the present disclosure, the cocatalyst may be at least one selected from the group consisting of compounds represented by Formulas 7 to 9 below:

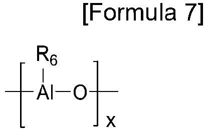

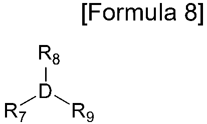

[Formula 9] [L-H]⁺[Z(A)4]⁻ or [L]⁺[Z(A)4]⁻

(in the Formulas 7 to 9, x is an integer greater than or equal to 2, R₆ is halogen, C₁-C₂₀ alkyl, or C₁-C₂₀ alkyl substituted with halogen, D is aluminum (Al) or boron (B), R₇, R₈, and R₉ are each independently a halogen atom, straight or branched C₁-C₂₀ alkyl, C₁-C₂₀ alkyl substituted with halogen, or C₁-C₂₀ alkoxy, L is a neutral or cationic Lewis base, [L-H]+ and [L]+ are Brønsted acids, Z is a group 13 element, and A is C₆-C₂₀ aryl or C₁-C₂₀ alkyl.)

The compound represented by the Formula 7 may be, for example, at least one selected from the group consisting of methylaluminoxane, ethylaluminoxane, isobutylaluminoxane, and butylaluminoxane, but is not limited thereto.

The compound represented by the Formula 8 may be, for example, at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminum methoxide, dimethylaluminum ethoxide, trimethylboron, triethylboron, triisobutylboron, tripropylboron, and tributylboron, but is not limited thereto.

The compound represented by the Formula 9 may be, for example, at least one selected from the group consisting of triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, Trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(o,p-dimethylphenyl)boron, tributylammonium tetra(p-trifluoromethylphenyl)boron, triphenylcarbonium tetra(p-trifluoromethylphenyl)boron, and triphenylcarbonium tetrapentafluorophenylboronm, but is not limited thereto.

The carrier is not particularly limited as long as it supports the above-described transition metal compound and a cocatalyst, but as an example, it may be at least one selected from the group consisting of silica, aluminum oxide, and magnesium oxide.

In an aspect of the present disclosure, the hybrid metallocene catalyst may include 0.001 to 10 mmol or 0.001 to 1 mmol of the three kinds of transition metal compounds of the Formulas 1 to 3 based on 1 g of the carrier, and may include 1 to 20 mmol or 2 to 15 mmol of a cocatalyst based on 1 g of the carrier, but the present disclosure is not necessarily limited thereto.

In an example, the average particle size of the carrier may be, but is not limited thereto, 10 to 250 µm, 10 to 150 µm, or 20 to 100 µm.

The micropore volume of the carrier may be, but is not limited to, 0.1 to 10 ml/g, 0.5 to 5 ml/g, or 1.0 to 3.0 ml/g.

In an aspect of the present disclosure, in the method of preparing high-density polyethylene, the hybrid metallocene catalyst may be injected into a reactor at a rate of 0.1 g/h or more, 0.5 g/h or more, 10 g/h or less, or 5 g/h or less, for example, 0.1 to 10 g/h or 0.5 to 5 g/h, but the present disclosure is not limited thereto.

In an aspect of the present disclosure, in the method of preparing high-density polyethylene, the C₄-C₂₀ α-olefin may be injected into the reactor at a rate of 50 g/h or more, 100 g/h or more, 150 g/h or more, 1500 g/h or less, or 1000 g/h or less, for example, 50 to 1500 g/h or 100 to 1000 g/h, but the present disclosure is not limited thereto.

In an aspect, the C₄-C₂₀ α-olefin is the same as the above-described C₄-C₂₀ α-olefin of the high-density polyethylene resin, so a detailed description thereof is omitted.

In an aspect of the present disclosure, the molar ratio of hydrogen/ethylene may be 0.01 or more, 0.1 or more, 10 or less, or 5% or less, for example, 0.01 to 10, 0.1 to 5, but is not limited thereto.

In an aspect of the present disclosure, the molar ratio of hexene/ethylene may be 0.01 or more, 0.1 or more, 10 or less, or 5 or less, for example, 0.01 to 10, 0.1 to 5, but is not limited thereto.

In an aspect of the present disclosure, the polymerization of ethylene and a C₄-C₂₀ α-olefin may be carried out at a temperature of 50 to 200°C, 60 to 100°C, or 60 to 90°C and a pressure of 1 to 50 bar, 1 to 30 bar, or any of the above values and any value therebetween, but is not limited thereto, and it is should be understood that the polymerization temperature and pressure can be appropriately changed depending on reactants and reaction conditions.

In an aspect of the present disclosure, the polymerization of ethylene and C₄-C₂₀ α-olefin may be a slurry phase or gas phase polymerization reaction, but the present disclosure is not limited thereto. When the polymerization is carried out in a liquid or slurry phase, a solvent may be further included. Specifically, examples of the solvent may include, but are not limited to, propane, butane, pentane, hexane, octane, decane, dodecane, cyclopentane, methylcyclopentane, cyclohexane, methylcyclohexane, benzene, toluene, xylene, dichloromethane, chloroethane, dichloroethane, and chlorobenzene, and these solvents may be mixed and used at a certain ratio, but the present disclosure is not limited thereto.

Therefore, in the method of preparing high-density polyethylene, high-density polyethylene suitable for packaging materials can be prepared by using the hybrid metallocene catalyst containing three types of transition metal compounds through only one polymerization process

Hereinafter, embodiments of the present disclosure will be further described with reference to specific experimental examples. The examples and comparative examples included in the experimental examples are only illustrative of the present disclosure and do not limit the scope of the appended claims. It is obvious to those skilled in the art that various changes and modifications to the examples are possible within the scope and technical idea of the present disclosure, and it is also natural that such changes and modifications fall within the scope of the appended claims.

### [Preparation Example 1]

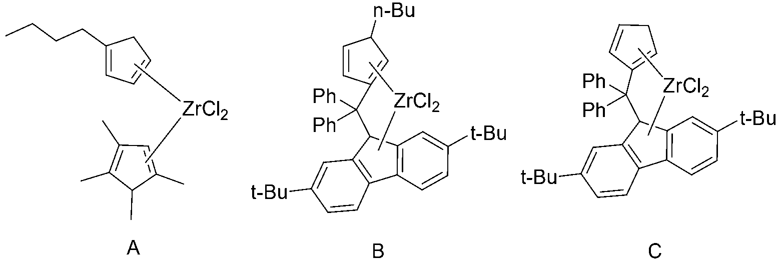

6.9 g of a composite transition metal compound including transition metal composition A (tetramethylcyclopentadienyl)(n-butylcyclopentadienyl) zirconium dichloride), transition metal compound B (diphenylmethylene-(3-butylcyclopentadienyl)(2,7-di-tert-butyl-9-fluorenyl)-zirconium(IV)-dichloride)) and transition metal compound C (diphenylmethylene-(cyclopentadienyl)(2,7-di-tert-butyl-9-fluorenyl)-zirconium(IV)-dichloride)) having the above structure (the molar ratio of each transition metal compound was 1:0.5:2 for A:B:C) was mixed with 1.1 kg of a toluene solution containing 10 wt% methylaluminum oxane (MAO) to prepare a mixed solution having a ratio of Al/Zr of 150, and stirred at room temperature for 1 hour to prepare a composite catalyst.

250 g of silica (XP2402) was put into a reactor, 30 ml of purified toluene was added thereto to prepare a silica slurry, and the composite catalyst was injected into the silica slurry and stirred in an oil bath at 75°C for 3 hours to prepare a metallocene catalyst solution. The metallocene catalyst solution was separated into solid and liquid, a supernatant was removed to separate only a metallocene catalyst, and the metallocene catalyst was washed three times with toluene and dried in vacuum at 60°C for 10 hours to recover 230 g of a powdered hybrid metallocene catalyst.

### [Preparation Example 2]

A powdered hybrid metallocene catalyst was prepared in the same manner as in Preparation Example 1, except that the transition metal compounds were included in 7.5 g of the composite transition metal compound at a molar ratio of A:B:C = 1:1.7:7.

### [Preparation Example 3]

A powdered hybrid metallocene catalyst was prepared in the same manner as in Preparation Example 1, except that the transition metal compounds were included in 6.6 g of the composite transition metal compound at a molar ratio of A:B:C = 1:0.3:1.4.

### [Comparative Preparation Example 1]

A powdered hybrid metallocene catalyst was prepared in the same manner as in Preparation Example 1, except that the transition metal compounds were included in 6.7 g of the composite transition metal compound at a molar ratio of A:B:C = 1:0.04:2.

### [Comparative Preparation Example 2]

A powdered hybrid metallocene catalyst was prepared in the same manner as in Preparation Example 1, except that the transition metal compounds were included in 6.2 g of the composite transition metal compound at a molar ratio of A:B:C = 1:0.5:0.4.

### [Comparative Preparation Example 3]

A powdered hybrid metallocene catalyst was prepared in the same manner as in Preparation Example 1, except that the composite transition metal compound was prepared using 1.8 g of the transition metal compound A and 5.0 g of the transition metal compound B.

### [Comparative Preparation Example 4]

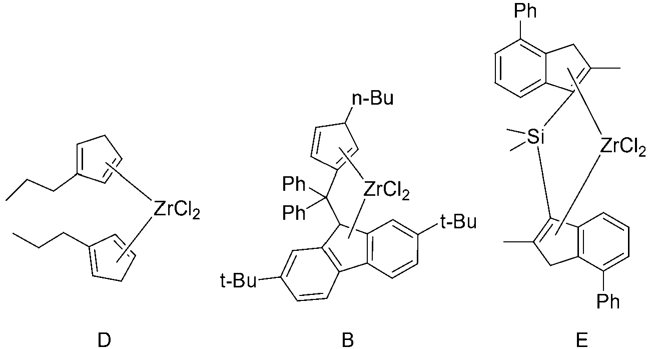

A powdered hybrid metallocene catalyst was prepared in the same manner as in Preparation Example 1, except that the composite transition metal compound was prepared using 1.2 g of transition metal compound D (bis(n-poropylcyclopentadienyl)zirconium chloride), 0.8 g of transition metal compound B (Diphenylmethylene-(3-butyl-cyclopentadienyl)(2,7-di-tert-butyl-9-fluorenyl zirconium(IV)-dichloride), and 3.8 g of transition metal compound E (dimethylsilylene)bis(2-methyl-4-phenylindenyl)zirconium dichloride).

### [Comparative Preparation Example 5]

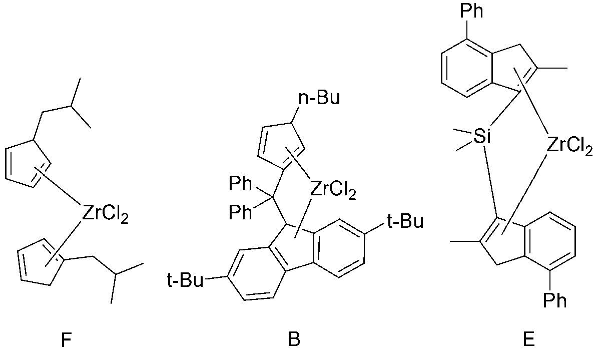

A powdered hybrid metallocene catalyst was prepared in the same manner as in Preparation Example 1, except that 1.8 g of transition metal compound F (bis(iso-butylcyclopentadienyl)zirconium chloride), 0.8 g of transition metal compound B (Diphenylmethylene-(3-butyl-cyclopentadienyl)(2,7-di-tert-butyl-9-fluorenyl-zirconium(IV)-dichloride), and 3.8 g of transition metal compound E (dimethylsilylene)bis(2-methyl-4-phenylindenyl)zirconium dichloride) were used.

### [Example 1]

An ethylene/1-hexene polymerization reaction was performed at 90°C by a continuous gas phase polymerization reactor including a fluidized bed by using the catalyst prepared in Preparation Example 1. Reaction conditions are described in Table 2 below.

### [Example 2]

An ethylene/1-hexene polymerization reaction was performed in the same manner as in Example 1, except that the catalyst prepared in Preparation Example 2 was used as a catalyst.

### [Example 3]

An ethylene/1-hexene polymerization reaction was performed in the same manner as in Example 1, except that the catalyst prepared in Preparation Example 3 was used as a catalyst.

### [Example 4]

An ethylene/1-hexene polymerization reaction was performed in the same manner as in Example 1, except that the polymerization temperature was set at 80°C.

### [Comparative Example 1]

An ethylene/1-hexene polymerization reaction was performed in the same manner as in Example 1, except that the catalyst prepared in Comparative Preparation Example 1 was used as a catalyst.

### [Comparative Example 2]

An ethylene/1-hexene polymerization reaction was performed in the same manner as in Example 1, except that the catalyst prepared in Comparative Preparation Example 2 was used as a catalyst.

### [Comparative Example 3]

An ethylene/1-hexene polymerization reaction was performed in the same manner as in Example 1, except that the catalyst prepared in Comparative Preparation Example 3 was used as a catalyst.

### [Comparative Example 4]

An ethylene/1-hexene polymerization reaction was performed in the same manner as in Example 1, except that the catalyst prepared in Comparative Preparation Example 4 was used as a catalyst.

### [Comparative Example 5]

An ethylene/1-hexene polymerization reaction was performed in the same manner as in Example 1, except that the catalyst prepared in Comparative Preparation Example 5 was used as a catalyst.

**[Table 1]**

| | Exam ple 1 | Exam ple 2 | Exam ple 3 | Exam ple 4 | Compar ative Example 1 | Compar ative Example 2 | Compar ative Example 3 | Compar ative Example 4 | Compar ative Example 5 |
|---|---|---|---|---|---|---|---|---|---|
| Polymerizati on temperature (°C) | 90 | 90 | 90 | 80 | 90 | 90 | 90 | 90 | 90 |
| Catalyst injection amount (g/hr) | 1.7 | 1.69 | 1.67 | 1.7 | 2.1 | 1.2 | 0.9 | 1.85 | 2.3 |
| Hydrogen injection amount (g/hr) | 18.00 | 31.69 | 23.44 | 18.00 | 15.12 | 17.00 | 18.00 | 10.86 | 5.96 |
| Hexene injection amount (g/hr) | 176 | 500 | 278 | 176 | 348 | 549 | 700 | 353 | 346 |
| Molar ratio of hydrogen/ ethylene | 1.14 | 1.53 | 1.34 | 1.14 | 0.84 | 0.77 | 1.09 | 0.29 | 0.09 |
| Molar ratio of hexene/ ethylene | 0.46 | 0.44 | 0.41 | 0.46 | 0.79 | 0.47 | 1.01 | 0.93 | 0.87 |
| Polymer production amount (kg/h) | 7.99 | 6.96 | 7.18 | 7.65 | 7.74 | 7.54 | 7.59 | 8.87 | 9.64 |

The physical properties of the polymers prepared in the above examples and comparative examples were measured as follows, and the results thereof are shown in Table 2.

### (1) Melt flow ratio (MFR)

Melting indices were measured at 190 °C under a load of 21.6 kg and a load of 2.16 kg, respectively, according to ASTM D 1238, and the ratio thereof (MI_{21.6}/MI_{2.16}) was calculated.

### (2) Density

Density was measured according to ASTM D 1505.

### (3) Molecular weight

Gel permeation chromatography-FTIR (GPC-FTIR) of Polymer Char's model number GPC-6 was used. Molecular weight was measured at a temperature of 160 °C, and trichlorobenzene was used as a solvent.

### (4) Thermal characteristics

Thermal characteristics were measured using a differential scanning calorimeter (DSC, device name: DSC 2920, manufacturer: TA instrument). Specifically, polymers were heated to 200°C, maintained at that temperature for 5 minutes, cooled to 20°C again, and then the temperature was increased again. At this time, each of the temperature rising and falling rates was controlled to 20°C/min.

**[Table 2]**

| | Example 1 | Example 2 | Example 3 | Example 4 | Comparative Example 1 | ComparativeExample 2 | ComparativeExample 3 | ComparativeExample 4 | ComparativeExample 5 |
|---|---|---|---|---|---|---|---|---|---|
| Combination of transition metal compounds | ABC | ABC | ABC | ABC | ABC | ABC | AB | DBE | FBE |
| Molar ratio of transition metal compounds | 1:0.5:2 | 1:1.7:7 | 1:0.3:1.4 | 1:0.5:2 | 1:0.04:2 | 1:0.5:0.4 | 1:1.5 | 1:0.25:1.25 | 1:0.5:1 |
| ^{*}MI | 0.588 | 0.74 | 1.12 | 0.78 | 0.95 | 1.8 | 0.73 | 0.62 | 0.73 |
| ^{*}MFI | 32.11 | 31.85 | 55.87 | 47.48 | 32.30 | 90 | 16.34 | 41.90 | 70.80 |
| ^{*}MFR | 54.61 | 43.04 | 49.88 | 60.87 | 34.00 | 50 | 22.38 | 67.58 | 96.98 |
| Density (g/cm³) | 0.943 | 0.944 | 0.941 | 0.945 | 0.956 | 0.940 | 0.9414 | 0.9460 | 0.9456 |
| Mz (g/mol) | 430,300 | 455,400 | 336,200 | 489,000 | 388,200 | 394,200 | 412,000 | 830,679 | 792,108 |
| Mn (g/mol) | 5,400 | 4,200 | 3,500 | 4,900 | 6,200 | 5,400 | 10,100 | 6,123 | 6,208 |
| Mw (g/mol) | 132,700 | 125,300 | 98,100 | 133,000 | 134,700 | 86,400 | 156,600 | 121,565 | 116,840 |
| PDI | 24.58 | 30.08 | 28.44 | 26.9 | 21.8 | 16.12 | 15.46 | 19.85 | 18.82 |
| Tm (°C) | 126.88 | 126.44 | 126.31 | 126.38 | 133.70 | 122.50 | 127.96 | 127.33 | 126.89 |
| Tc (°C) | 115.6 | 114.64 | 113.62 | 114.97 | 117.5 | 112.8 | 115.0 | 116.02 | 115.73 |
| Xc (%) | 57.79 | 62.63 | 60.04 | 60.38 | 74.00 | 58.21 | 85.21 | 68.84 | 68.63 |
| * MI measured at 190°C under load of 2.16 kg | | | | | | | | | |
| * MFI measured at 190°C under load of 21.6 kg | | | | | | | | | |
| *MFR=MFI/MI | | | | | | | | | |

The polyethylene polymers prepared in the examples and comparative examples were extruded as follows to manufacture films, and then the physical properties of the films are listed in Table 3 below.

### (5) Method of manufacturing polyethylene film

The polyethylene polymers of Examples 1 to 4 and Comparative Examples 1 to 5 were extruded at 245°C using a twin-screw extruder of L/D 42DML 25 mm. Die temperature was maintained at 265 °C. T-DIE was adjusted to be a size of 30 to 35 cm and a thickness of 770 to 780 µm to manufacture films.

### (6) Sequential biaxial stretching processing

Biaxial stretching processing was performed using Model name PS002 equipment of SDB Co., Ltd. First, a sample, a sheet of 10 cm x 10 cm x 1 mm, is prepared at 190°C using a press. The prepared sheet is heated in an oven at 120 to 125°C for 300 seconds, stretched in the MD (machine direction) at a speed of 200 %/s, and then stretched in the TD (traverse direction).

### (7) Simultaneous biaxial stretching processing

Biaxial stretching processing was performed using Model KARO 5.0 equipment of Burckner Co., Ltd. The polymer was prepared into a sample of 9 cm x 9 cm. The prepared sample is simultaneously stretched in both machine direction (MD) and traverse direction (TD) at a speed of 200 %/s under heating conditions of 120 to 130°C.

### (8) Haze measurement

Five measurements were performed per sample according to ASTM D 1003, and the average value thereof was described.

### (9) Clarity measurement

Five measurements were performed per sample according to ASTM D 1003, and the average value thereof was described.

**[Table 3]**

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Simultaneous biaxial stretching | | | | | | | | | |
| MD X TD | 7X7 | 7X7 | 7X7 | 7X7 | Fail | | | | |
| Thickness (µm) | 14.9 | 9.0 | 9.4 | 14.9 | Fail | | | | |
| Haze( %) | 9.2 | 7.4 | 19.2 | 9.2 | Fail | | | | |
| Clarity (%) | 96.21 | 98.4 | 89.6 | 95.3 | Fail | | | | |
| Impact strength (gf) | 389 | 206 | 181 | 397 | Fail | | | | |

| Sequential biaxial stretching | | | | | | | | | |
|---|---|---|---|---|---|---|---|---|---|
| Thickenss (µm) | 15.2 | 3.4 | 8.2 | 15.4 | Fail | | | | |
| MD X TD | 4X7 | 5X9 | 5X9 | 4X7 | | | | | |
| Haze( %) | 19.14 | 15.4 | 25.0 | 19.14 | Fail | | | | |
| Clarity (%) | 89.7 | 82.0 | 91.0 | 97.6 | Fail | | | | |
| Impact strength (gf) | 365 | 121 | 212 | 384 | Fail | | | | |

Referring to Tables 1 to 3, the hybrid metallocene catalysts of Examples 1 to 4 included the transition metal compounds of Formulas 1 to 3, and thus the polyolefin resins manufactured by polymerizing ethylene and α-olefin had a high density of 0.94 g/cm³ or more, and all of them were capable of biaxial stretching at a high magnification. However, it was confirmed that the high-density polyethylene polymers of Comparative Examples 3 to 5 prepared by using a catalyst other than the specific catalyst mixture of the present disclosure were broken and thus could not be stretched. Comparative Examples 1 and 2 include transition metal compounds of Formulas 1 to 3 of the present disclosure, but when the ratio of Formula 1: Formula 2: Formula 3 is not satisfied, stretching is impossible, resulting in breakage or tearing during stretching, thus making processing impossible. Therefore, it was confirmed that such biaxial stretching characteristics were exhibited when a high-density polyethylene polymer was prepared using the hybrid metallocene catalyst of the present disclosure having a specific ratio.

Above, although an embodiment has been described in detail through examples and experimental examples, the scope of an embodiment is not limited to a specific example, and should be interpreted in accordance with the appended patent claims.

## Claims

1. A method of preparing high-density polyethylene, the method comprising: polymerizing ethylene and C₄-C₂₀ α-olefin under a hybrid metallocene catalyst including transition metal compounds of Formulas 1 to 3 below, wherein the hybrid metallocene catalyst includes the transition metal compounds at a molar ratio of Formula 1: Formula 2: Formula 3 = 1: 0.2 to 3: 1 to 7: 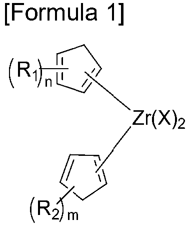 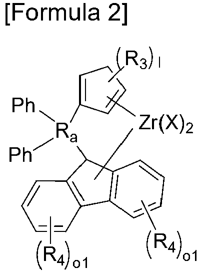 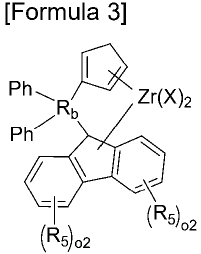 in Formulas 1 to 3,
R₁, R₂, R₃, R₄, and R₅ are each independently C₁-C₆ alkyl,
Rₐ and R_{b} are each independently C₁-C₆ alkylene,
X is a halogen,
n and m are integers of 0 to 5,
l is an integer of 1 to 4, and
o1 and o2 are integers of 0 to 4.

2. The method of claim 1,
wherein the C₄-C₂₀ α-olefin is a C₅-C₈ α-olefin.

3. The method of claim 1,
wherein Formula 1 is Formula 4 below, Formula 2 is Formula 5 below, and Formula 3 is Formula 6 below:

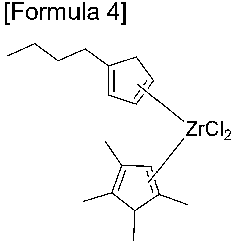

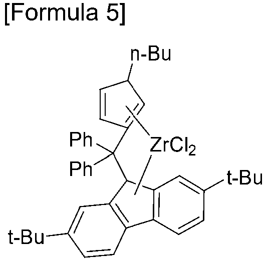

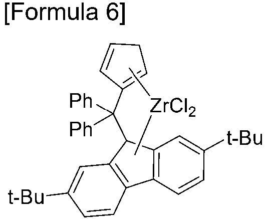

4. The method of claim 1,
wherein a temperature of the polymerization is 60 °C to 90 °C.

5. The method of claim 1,
wherein the hybrid metallocene catalyst is a supported catalyst in which a transition metal compound and a cocatalyst are supported on a carrier.

6. The method of claim 5,
wherein the cocatalyst is at least one selected from the group consisting of compounds represented by Formulas 7 to 9 below: 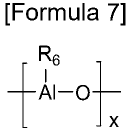 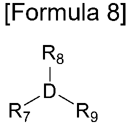
[Formula 9] [L-H]⁺[Z(A)4]⁻ or [L]⁺[Z(A)4]⁻
wherein, in Formulas 7 to 9,
x is an integer greater than or equal to 2,
R₆ is a halogen, C₁-C₂₀ alkyl, or C₁-C₂₀ alkyl substituted with a halogen,
D is aluminum (Al) or boron (B),
R₇, R₈, and R₉ are each independently a halogen atom, straight or branched C₁-C₂₀ alkyl, C₁-C₂₀ alkyl substituted with a halogen, or C₁-C₂₀ alkoxy,
L is a neutral or cationic Lewis base, [L-H]+ and [L]+ are Brønsted acids,
Z is a group 13 element, and
A is C₆-C₂₀ aryl or C₁-C₂₀ alkyl.

7. The method of claim 5,
wherein the carrier is at least one selected from the group consisting of silica, aluminum oxide, and magnesium oxide.

8. A high-density polyethylene resin prepared by polymerizing ethylene and C₄-C₂₀ α-olefin in the presence of a hybrid catalyst, wherein the high-density polyethylene resin has a density of 0.94 g/cm³ or more, a PDI of 25 or more, and is capable of being stretched 4 times or more in a machine direction (MD) at a speed of 200 %/s at 120 to 130 °C and then sequentially biaxially stretched 4 times or more in a transverse direction (TD), or of being simultaneously biaxially stretched 4x4 times or more in the MD and TD.

9. The high-density polyethylene resin of claim 8,
wherein the hybrid metallocene catalyst includes transition metal compounds of Formulas 1 to 3 below: 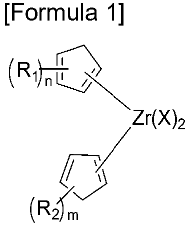 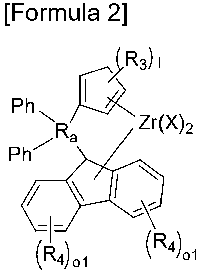 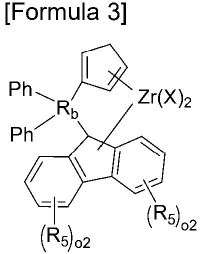 in Formulas 1 to 3,
R₁, R₂, R₃, R₄, and R₅ are each independently C₁-C₆ alkyl,
Rₐ and R_{b} are each independently C₁-C₆ alkylene,
X is a halogen,
n and m are integers of 0 to 5,
l is an integer of 1 to 4, and
o1 and o2 are integers of 0 to 4.

10. The high-density polyethylene resin of claim 9,
wherein the hybrid metallocene catalyst includes the transition metal compounds at a molar ratio of Formula 1: Formula 2: Formula 3 = 1: 0.2 to 3: 1 to 7.

11. The high-density polyethylene resin of claim 8,
wherein the C₄-C₂₀ α-olefin is a C₅-C₈ α-olefin.

12. The high-density polyethylene resin of claim 8,
wherein the high-density polyethylene resin has a melt flow rate (MFR) of 40 or more.

13. The high-density polyethylene resin of claim 8,
wherein the high-density polyethylene resin has a crystallinity (Xc) of 70 % or less.

14. A high-density polyethylene film comprising the high-density polyethylene resin of claim 8.

15. The high-density polyethylene film of claim 14,
wherein the high-density polyethylene film has a haze of 25% or less as measured according to ASTM D1003.

16. The high-density polyethylene film of claim 14,
wherein the high-density polyethylene film has a transparency of 70 % or more as measured according to ASTM D1003.

17. The high-density polyethylene film of claim 14,
wherein the high-density polyethylene film has an impact strength of 120 gf or more as measured according to ASTM D1709.

18. A packaging material manufactured using the film of any one of claims 14 to 17.
